# EUROPEAN PATENT APPLICATION

(11) **EP 4 835 995 A1**
(43) Date of publication of application: **04.11.2026**
(21) Application number: 25880408.7
(22) Date of filing: 17.10.2025
(51) Int. Cl.: H01M 4/36, H01M 4/525, H01M 4/505, H01M 4/131, H01M 10/052, H01M 4/02

(54) **POSITIVE ELECTRODE ACTIVE MATERIAL AND LITHIUM SECONDARY BATTERY COMPRISING SAME**

(30) Priority: 18.10.2024 KR 20240142836; 16.09.2025 KR 20250132811
(71) Applicant: EcoPro BM Co., Ltd, Cheongju-si, Chungcheongbuk-do 28116 (KR)
(72) Inventor: NAM, Yu Jin, Cheongju-si, Chungcheongbuk-do 28116 (KR); LEE, Jae Kyun, Cheongju-si, Chungcheongbuk-do 28116 (KR); JANG, Woo Tae, Cheongju-si, Chungcheongbuk-do 28116 (KR)
(74) Representative: Vossius & Partner Patentanwälte Rechtsanwälte mbB
(86) International application number: PCT/KR2025/016512
(87) International publication number: WO 2026/084526

(57) **Abstract**

The present specification relates to a positive electrode active material and a lithium secondary battery comprising the same, and more particularly, to a positive electrode active material comprising a lithium composite oxide, wherein the lithium composite oxide comprises at least lithium and a transition metal, the lithium composite oxide comprises at least one of a unit particle and a secondary particle in which the unit particles are aggregated, and a thin coating layer comprising lithium and tungsten is formed on at least a portion of a surface of at least one of the unit particles to improve capacity and resistance characteristics, and a lithium secondary battery comprising the same.

## Description

### BACKGROUND

### 1. Field of the Invention

The present specification relates to a positive electrode active material and a lithium secondary battery comprising the same, and more specifically, to a positive electrode active material comprising a lithium composite oxide, wherein the lithium composite oxide comprises at least lithium and a transition metal, the lithium composite oxide comprises at least one of a unit particle and a secondary particle in which the unit particles are aggregated, and a thin coating layer comprising lithium and tungsten is formed on at least a portion of a surface of at least one of the unit particles to improve capacity and resistance characteristics, and a lithium secondary battery comprising the same.

### 2. Discussion of Related Art

Batteries store power by using materials capable of undergoing electrochemical reactions at a positive electrode and a negative electrode. A representative example of batteries is a lithium secondary battery that stores electrical energy by the difference in chemical potential when lithium ions are intercalated/deintercalated into/from the positive electrode and the negative electrode.

The lithium secondary battery is manufactured by using materials capable of reversible intercalation/deintercalation of lithium ions as positive and negative electrode active materials and filling an organic electrolyte or a polymer electrolyte between the positive and negative electrodes.

A lithium composite oxide is used as a positive electrode active material for a lithium secondary battery, and as an example, composite oxides such as LiCoO₂, LiMn₂O₄, LiNiO₂, LiMnO₂, and the like are being studied.

Among the positive electrode active materials, LiCoO₂ is the most widely used due to its excellent lifetime characteristics and charge/discharge efficiency, but it has limitations in price competitiveness because cobalt, which is used as a raw material, is expensive due to resource constraints.

Lithium manganese oxides such as LiMnO₂ and LiMn₂O₄ have advantages of excellent thermal safety and low price, but also have problems of low capacity and poor high-temperature characteristics. In addition, a LiNiO₂-based positive electrode active material exhibits battery characteristics such as high discharge capacity, but it is difficult to synthesize the LiNiO₂-based positive electrode active material due to cation mixing between Li and transition metals, thereby causing significant problems in rate characteristics.

Therefore, in order to improve the low rate and cycle characteristics of LiNiO₂ while maintaining its high reversible capacity, ternary lithium composite oxides such as the so-called NCM (Ni-Co-Mn) and NCA (Ni-Co-Al), in which part of the nickel is substituted with cobalt, manganese, and/or aluminum, or quaternary lithium composite oxides such as NCMA (Ni-Co-Mn-Al) have been developed. Since the reversible capacity is reduced as the nickel content in the ternary or quaternary lithium composite oxide decreases, research has been widely conducted to increase the nickel content in the lithium composite oxide.

However, as the content of nickel in the lithium transition metal oxide increases, cation mixing increases in the crystal structure, thereby reducing stability or increasing the content of unreacted lithium impurities such as LiOH and Li₂CO₃ on the surface. As the content of lithium impurities remaining on the surface of the lithium transition metal oxide increases, gas generation and swelling may be promoted in a lithium secondary battery using the lithium transition metal oxide as a positive electrode active material. As the content of lithium impurities remaining on the surface of the lithium transition metal oxide increases, a paste composition becomes gel-like due to lithium impurities when a paste for forming a positive electrode active material layer is prepared using the lithium transition metal oxide.

Meanwhile, in a conventional positive electrode active material in the form of polycrystalline particles, cracks or structural collapse easily occur at grain boundaries during a charge/discharge process and side reactions with an electrolyte easily occur, thereby causing a problem of increasing an amount of gas generation. In order to solve the safety and gas generation problems, a positive electrode active material in the form of a single crystal has been developed.

However, a positive electrode active material in the form of a single crystal having a relatively large particle size has problems in that a lithium migration path becomes longer, thereby increasing resistance and decreasing capacity.

### SUMMARY OF THE INVENTION

In the lithium secondary battery market, while growth of lithium secondary batteries for electric vehicles is driving the market, demand for a positive electrode material used in the lithium secondary battery is also continuously changing.

For example, in the past, lithium secondary batteries using lithium iron phosphate (LFP) have mainly been used from the viewpoint of ensuring safety, but recently, use of nickel-based lithium transition metal oxide having a higher energy capacity per weight compared to LFP has been increasing.

Accordingly, a positive electrode active material used in a higher-specification lithium secondary battery needs to appropriately satisfy both expected stability and reliability even under more severe operating conditions.

Considering these various environments, an object of the present specification is to provide a positive electrode active material having excellent electrochemical performance by comprising a lithium composite oxide containing at least lithium and a transition metal, wherein a thin coating layer comprising lithium and tungsten is formed on at least a portion of a surface of at least one of the unit particles to reduce resistance while increasing charge/discharge capacity.

In addition, the present disclosure is also directed to providing a lithium secondary battery using the positive electrode active material defined herein.

The objects of the present disclosure are not limited to the above-described objects, and other objects and advantages of the present disclosure that are not described can be understood by the following description and will be more clearly understood by the embodiments of the present disclosure. In addition, it is apparent that the objects and advantages of the present disclosure can be realized by the means and combinations thereof indicated in the claims.

According to an aspect of the present specification, there is provided a positive electrode active material comprising a lithium composite oxide capable of intercalation/deintercalation of lithium, wherein the lithium composite oxide comprises at least lithium and a transition metal, the lithium composite oxide comprises at least one of a unit particle and a secondary particle in which the unit particles are aggregated, and a first coating layer having an average thickness of 3 to 10 nm and comprising lithium and tungsten is formed on at least a portion of a surface of at least one of the unit particles. For example, the thickness of the first coating layer may be 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, or a range between any two values thereof, but is not limited thereto.

In addition, the average particle diameter (D₅₀) of the unit particles may be 0.2 to 5 µm, for example, 0.2 µm, 0.25 µm, 0.3 µm, 0.35 µm, 0.4 µm, 0.45 µm, 0.5 µm, 0.55 µm, 0.6 µm, 0.65 µm, 0.7 µm, 0.75 µm, 0.8 µm, 0.85 µm, 0.9 µm, 0.95 µm, 1 µm, 1.1 µm, 1.15 µm, 1.2 µm, 1.25 µm, 1.3 µm, 1.35 µm, 1.4 µm, 1.45 µm, 1.5 µm, 1.55 µm, 1.6 µm, 1.65 µm, 1.7 µm, 1.75 µm, 1.8 µm, 1.85 µm, 1.9 µm, 1.95 µm, 2 µm, 2.25 µm, 2.5 µm, 2.75 µm, 3 µm, 3.25 µm, 3.5 µm, 3.75 µm, 4 µm, 4.25 µm, 4.5 µm, 4.75 µm, 5 µm, or a range between any two values thereof.

In one example, the lithium composite oxide may comprise a tungsten element present in a doped state in the unit particles.

Meanwhile, the tungsten element contained in at least one of the unit particles may exhibit a concentration gradient that decreases toward a center of the unit particle.

Further, the concentration gradient of the tungsten element may be present only up to a predetermined depth from the surface of the unit particle. For example, the predetermined depth may be 0.001d, 0.002d, 0.003d, 0.004d, 0.005d, 0.006d, 0.007d, 0.008d, 0.009d, 0.01d, or a range between any two values thereof when a diameter of the unit particle is d, but is not limited thereto.

Here, 50 mol% or more, for example, 50 mol%, 52.5 mol%, 55 mol%, 57.5 mol%, 60 mol%, 62.5 mol%, 65 mol%, 67.5 mol%, 70 mol%, 72.5 mol%, 75 mol%, 77.5 mol%, 80 mol%, 82.5 mol%, 85 mol%, 87.5 mol%, 90 mol%, or a range between any two values thereof, of a content of the tungsten element contained in at least one of the unit particlesmay be present at a depth of 0.1 to 10 nm, for example, 0.1 nm, 0.5 nm, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, or a range between any two values thereof from the surface of the unit particle toward a center direction of the unit particle.

Further, in at least one of the unit particles, at least one of the transition metal elements excluding the tungsten element may exhibit a concentration gradient that increases toward the center of the unit particle.

Meanwhile, the concentration gradient of the transition metal element may be present only up to a predetermined depth from the surface of the unit particle. For example, the predetermined depth may be 0.001d, 0.002d, 0.003d, 0.004d, 0.005d, 0.006d, 0.007d, 0.008d, 0.009d, 0.01d, or a range between any two values thereof when the diameter of the unit particle is d, but is not limited thereto.

In one example, the lithium composite oxide may be represented by Chemical Formula 1 below:

[Chemical Formula 1] Li_{w}Ni_{1-(x+y+z)}WₓM1_{y}M2_{z}O₂

In Chemical Formula 1, M1 is at least one selected from Co, Mn, and Al, M2 is at least one selected from Na, K, Mg, Ba, B, Ce, Hf, Ta, Cr, F, Al, V, Fe, Zr, Zn, Si, Y, Nb, Ga, Sn, Mo, W, P, Sr, Ge, Nd, Gd, and Cu, and 0.5≤w≤1.5, 0≤x≤0.20, 0≤y≤0.60, 0≤z≤0.20, 0.40≤1-(x+y+z)≤0.70. Here, w may be 0.50, 0.55, 0.60, 0.65, 0.70, 0.75, 0.80, 0.85, 0.90, 0.95, 1.00, 1.05, 1.10, 1.15, 1.20, 1.25, 1.30, 1.35, 1.40, 1.45, 1.50, or a range between any two values thereof, x may be 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, or a range between any two values thereof, y may be 0, 0.01, 0.04, 0.07, 0.10, 0.13, 0.16, 0.19, 0.22, 0.25, 0.28, 0.31, 0.34, 0.37, 0.40, 0.43, 0.46, 0.49, 0.52, 0.55, 0.58, 0.60, or a range between any two values thereof, and z may be 0.00, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, or a range between any two values thereof, and 1-(x+y+z) may be 0.40, 0.42, 0.45, 0.48, 0.51, 0.54, 0.57, 0.60, 0.63, 0.66, 0.69, 0.70, or a range between any two values thereof.

Here, the first coating layer may comprise a tungsten-based oxide represented by Chemical Formula 2 below:

[Chemical Formula 2 LiₐW_{b}M3_{c}O_{d}

In Chemical Formula 2, M3 is at least one selected from Ni, Mn, Co, Fe, Cu, Nb, Mo, Al, Cr, Zr, Zn, Na, K, Ca, Mg, Pt, Au, B, P, Eu, Sm, Ce, V, Ba, Ta, Sn, Hf, Gd, and Nd, and 0≤a≤10, 0<b≤8, 0≤c≤8, 2≤d≤13. Here, a may be 0, 0.5, 1, 1.5, 2, 2.5, 3, 3.5, 4, 4.5, 5, 5.5, 6, 6.5, 7, 7.5, 8, 8.5, 9, 9.5, 10, or a range between any two values thereof, b may be 0.1, 0.5, 1, 1.5, 2, 2.5, 3, 3.5, 4, 4.5, 5, 5.5, 6, 6.5, 7, 7.5, 8, or a range between any two values thereof, c may be 0, 0.5, 1, 1.5, 2, 2.5, 3, 3.5, 4, 4.5, 5, 5.5, 6, 6.5, 7, 7.5, 8, or a range between any two values thereof, and d may be 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, or a range between any two values thereof

In addition, the first coating layer may comprise a Li₆W₂O₉ phase

Meanwhile, a second coating layer comprising tungsten-based oxide particles having an average particle diameter of 1 to 415 nm may be formed on at least a portion of the surface of at least one of the unit particles.

Here, the tungsten-based oxide particles may have an average particle diameter of 1 to 415 nm or less, for example, 1 nm, 10 nm, 25 nm, 40 nm, 55 nm, 70 nm, 85 nm, 100 nm, 115 nm, 130 nm, 145 nm, 160 nm, 175 nm, 190 nm, 205 nm, 220 nm, 235 nm, 250 nm, 265 nm, 280 nm, 295 nm, 310 nm, 325 nm, 340 nm, 355 nm, 370 nm, 385 nm, 400 nm, 415 nm, or a range between any two values thereof.

The tungsten-based oxide particles may be represented by Chemical Formula 2 described above.

In addition, the second coating layer may comprise a Li₆W₂O₉ phase.

According to another aspect of the present invention, there is provided a positive electrode including the positive electrode active material described above.

According to still another aspect of the present invention, there is provided a lithium secondary battery using the positive electrode described above.

### BRIEF DESCRIPTION OF THE DRAWINGS

The objects, features, and advantages of the present disclosure will become more apparent from the following description of exemplary embodiments with reference to the accompanying drawings, in which:
FIG. 1 is an XRD analysis result of a lithium metal oxide prepared in Preparation Example 1;
FIG. 2 shows EDS analysis results and surface images of Example 1-2, Example 1-5, and Comparative Example 1-5 prepared in Preparation Example 1;
FIGS. 3 and 4 are TEM analysis results of Example 1-2 prepared in Preparation Example 1; and
FIG. 5 is an EIS analysis result of a lithium secondary battery prepared in Preparation Example 2.

### DETAILED DESCRIPTION OF EXEMPLARY EMBODIMENTS

For a better understanding of the present disclosure, certain terms are defined herein for convenience. Unless otherwise defined herein, scientific and technical terms used in the present disclosure will have meanings commonly understood by those skilled in the art. In addition, unless otherwise specified in the context, the singular should be understood to include the plural, and the plural should be understood to include the singular. Amounts or ratios indicated herein are molar amounts or molar ratios, unless otherwise specified in the context.

### Positive electrode active material

A positive electrode active material according to one aspect of the present disclosure comprises a lithium transition metal oxide containing lithium, nickel, and cobalt.

The lithium composite oxide is a metal composite oxide capable of intercalation/deintercalation of lithium ions and has a layered crystal structure belonging to the R-3m space group. The lithium composite oxide with a layered crystal structure has specific peaks in the 2θ region of 18° to 20° in the diffraction pattern obtained from XRD analysis.

In an embodiment, the lithium composite oxide comprises at least lithium and a transition metal. The transition metal may comprise at least one, at least two, at least three, or all selected from nickel, cobalt, manganese, and aluminum.

In a non-limiting example, the lithium composite oxide may be preferably a lithium nickel-based composite oxide containing nickel. The lithium composite oxide may be a lithium nickel-based composite oxide containing nickel and at least one transition metal.

In order to improve the low rate performance and lifetime of LiNiO₂ while maintaining its high reversible capacity, the lithium nickel-based composite oxide may be a ternary lithium composite oxide such as the so-called NCM (Ni-Co-Mn) and NCA (Ni-Co-Al), in which part of the nickel is substituted with cobalt, manganese, and/or aluminum, or a quaternary lithium composite oxide such as NCMA (Ni-Co-Mn-Al). The ternary or quaternary lithium composite oxide may further comprise a dopant other than nickel, cobalt, manganese, and aluminum. In another embodiment of the present invention, the lithium nickel-based composite oxide may be a cobalt-free lithium composite oxide. The cobalt-free lithium composite oxide may further comprise a dopant other than nickel, cobalt, manganese, and aluminum.

Meanwhile, the lithium composite oxide may exist as a unit particle alone, or may comprise a secondary particle formed by aggregation of the unit particles. For convenience, the unit particle may be referred to as a primary particle herein. In addition, the unit particle may be in the form of a single crystal, but are not limited thereto.

Unless otherwise defined, the term "surface portion of a particle" as used herein refers to a region relatively close to an "outermost surface" of the particle, and the term "central portion of a particle" refers to a region relatively closer to a "center" of the particle than the "surface portion."

Accordingly, the term "surface portion of a unit particle (primary particle)" refers to a region relatively close to an "outermost surface" of the unit particle (primary particle), and the term "central portion of a unit particle (primary particle)" refers to a region relatively closer to a "center" of the unit particle (primary particle) than the "surface portion."

Similarly, the term "surface portion of a secondary particle" refers to a region relatively close to an "outermost surface" of the secondary particle, and the term "central portion of a secondary particle" refers to a region relatively closer to a "center" of the secondary particle than the "surface portion."

In this case, a region other than the "surface portion of a particle" in any particle may be defined as a "central portion of the particle."

The unit particle may have a circular shape, a rod shape, an elliptical shape, and/or an irregular shape. In addition, unless specifically intended in a manufacturing process, unit particles having various shapes may be present in the same positive electrode active material. Further, the unit particle refers to a particle unit in which a grain boundary is not visually present when observed at a magnification of 5,000 to 20,000 times using a scanning electron microscope.

Meanwhile, in one example, the average particle diameter (D₅₀) of the unit particles may be 0.2 to 5 µm, for example, 0.2 µm, 0.25 µm, 0.3 µm, 0.35 µm, 0.4 µm, 0.45 µm, 0.5 µm, 0.55 µm, 0.6 µm, 0.65 µm, 0.7 µm, 0.75 µm, 0.8 µm, 0.85 µm, 0.9 µm, 0.95 µm, 1 µm, 1.1 µm, 1.15 µm, 1.2 µm, 1.25 µm, 1.3 µm, 1.35 µm, 1.4 µm, 1.45 µm, 1.5 µm, 1.55 µm, 1.6 µm, 1.65 µm, 1.7 µm, 1.75 µm, 1.8 µm, 1.85 µm, 1.9 µm, 1.95 µm, 2 µm, 2.25 µm, 2.5 µm, 2.75 µm, 3 µm, 3.25 µm, 3.5 µm, 3.75 µm, 4 µm, 4.25 µm, 4.5 µm, 4.75 µm, 5 µm, or a range between any two values thereof.

The average particle diameter of the unit particles may be the average value of the length of the unit particles in the major axis direction and the length of the unit particles in the minor axis direction ([major axis length + minor axis length]/2). The average particle diameter of the unit particles may be calculated as an average value of particle diameters of all unit particles observed from a surface SEM image and/or a cross-sectional SEM image of the lithium composite oxide.

When the average particle diameter of the unit particles is too small, the specific surface area of the positive electrode active material becomes excessively large, which may cause a decrease in safety due to side reactions with the electrolyte. On the other hand, when the average particle diameter of the unit particles is too large, the diffusivity of lithium ions may rather decrease.

In addition, the particle size distribution of the lithium composite oxide among the positive electrode active materials may be measured using a laser diffraction method. For example, after dispersing particles in a dispersion medium and irradiating the same with ultrasonic waves at about 28 kHz at an output of 60 W using a commercially available laser diffraction particle size measurement device (such as Microtrac MT 3000), a volume cumulative particle size distribution graph is obtained, and the particle size corresponding to 50% of the volume cumulative amount can be defined as the average particle diameter (D₅₀).

As used herein, "particle size" has the same meaning as "particle diameter" or "diameter", and unless otherwise defined, all "average particle diameters" mean a particle size corresponding to 50% of the volume cumulative amount determined by the laser diffraction method described above.

When secondary particles in which the unit particles are aggregated are present, the secondary particles may be formed by aggregating 2 to 10, for example, 2, 3, 4, 5, 6, 7, 8, 9, or 10 of the unit particles, but are not limited thereto.

Voids and/or grain boundaries may exist between the unit particles constituting the secondary particles. The unit particles may be spaced apart from neighboring unit particles inside the secondary particles to form internal voids. In addition, the unit particles may form surfaces existing inside the secondary particles by contacting internal voids rather than contacting neighboring unit particles with each other to form grain boundaries. Meanwhile, a surface where the unit particles present on the outermost surface of the secondary particles are exposed to external air forms the surface of the secondary particles.

The average particle diameter of the secondary particles in which the unit particles are aggregated may vary depending on the number of aggregated unit particles, but may be generally 1 to 10 µm, for example, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, or a range between any two values thereof.

In one example, the lithium composite oxide may comprise a tungsten element present in a doped state in the unit particles.

The lithium composite oxide doped with a tungsten element has a stable crystal structure, so that structural stress or occurrences of cracks that may occur during a charge/discharge process can be reduced. In addition, the lithium composite oxide doped with a tungsten element may be excellent in discharge capacity, high-rate performance, and the like. Meanwhile, a diffusion path of lithium ions in the lithium composite oxide is expanded by doping the tungsten element, so that interfacial resistance can be reduced. That is, the high-power characteristics of the positive electrode active material can be improved by tungsten doping.

However, the doped tungsten may interfere with the diffusion of lithium ions or act as a resistance depending on its doping mode, thereby lowering the conductivity of the lithium composite oxide. In addition, some tungsten may act as an impurity, rather lowering structural stability. Although not necessarily so, the larger the amount of doped tungsten, the higher the probability that such side effects may occur.

Separately from this, the tungsten element in the lithium composite oxide may exist in a form showing a concentration gradient that decreases toward the center of the unit particle within at least one of the unit particles. That is, the concentration gradient of the tungsten element formed in the unit particles may be in a direction from the surface portion of the unit particles toward the center portion of the unit particles.

In the present specification, simple doping within unit particles, forming a concentration gradient within unit particles, and existing on the surface of unit particles may be mutually distinct concepts.

Features exhibited by such a tungsten element can be specified by various methods. For example, there is a method of confirming through STEM-EDS analysis.

As such, when the tungsten element exhibits a concentration gradient that decreases toward the center of the unit particle, side effects can be minimized while having the advantages of the tungsten element doping described above.

This type of concentration gradient may be formed by dry-mixing a lithium composite oxide with a tungsten-based compound and then applying a predetermined low-temperature heat treatment process. In particular, by introducing tungsten with a thin thickness in this manner, the lithium composite oxide can be made to have excellent capacity and resistance characteristics.

The concentration gradient exhibited by the tungsten element within the unit particles may perform a role of reducing resistance at the unit particle surface portion.

That is, the concentration gradient of the tungsten element may be present only up to a predetermined depth from the surface of the unit particle. The region where the concentration gradient does not exist includes a case where the tungsten element does not exist or a concentration difference according to position is not significant.

For example, 50 mol% or more, for example, 50 mol%, 52.5 mol%, 55 mol%, 57.5 mol%, 60 mol%, 62.5 mol%, 65 mol%, 67.5 mol%, 70 mol%, 72.5 mol%, 75 mol%, 77.5 mol%, 80 mol%, 82.5 mol%, 85 mol%, 87.5 mol%, 90 mol%, or a range between any two values thereof, of the content of the tungsten element contained in at least one of the unit particles may be present at a depth of 0.1 to 10 nm, for example, 0.1 nm, 0.5 nm, 1 nm, 1.5 nm, 2 nm, 2.5 nm, 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, or a range between any two values thereof from the surface of the unit particle toward the center portion direction of the unit particle, but is not limited thereto.

Particularly, most of the tungsten elements contained in the unit particles may be located in the concentration gradient layer.

Meanwhile, due to the concentration gradient formed by the tungsten element, at least one of the transition metal elements constituting the lithium composite oxide may exhibit a concentration gradient that increases from the surface toward the center portion.

Accordingly, the concentration gradient of the transition metal element may be present only up to a predetermined depth from the surface of the unit particle.

In an embodiment, the lithium composite oxide may be represented by Chemical Formula 1 below:

[Chemical Formula 1] Li_{w}Ni_{1-(x+y+z)}WₓM1_{y}M2_{z}O₂

In Chemical Formula 1, M1 is at least one selected from Co, Mn, and Al, M2 is at least one selected from Na, K, Mg, Ba, B, Ce, Hf, Ta, Cr, F, Al, V, Fe, Zr, Zn, Si, Y, Nb, Ga, Sn, Mo, W, P, Sr, Ge, Nd, Gd, and Cu, and 0.5≤w≤1.5, 0≤x≤0.20, 0≤y≤0.60, 0≤z≤0.20, 0.40≤1-(x+y+z)≤0.70.

Here, w, which represents a ratio of lithium to all elements excluding lithium in the lithium composite oxide, may be 0.50, 0.55, 0.60, 0.65, 0.70, 0.75, 0.80, 0.85, 0.90, 0.95, 1.00, 1.05, 1.10, 1.15, 1.20, 1.25, 1.30, 1.35, 1.40, 1.45, 1.50, or a range between any two values thereof.

The x, which represents a ratio of tungsten to all elements excluding lithium in the lithium composite oxide, may be 0, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, or a range between any two values thereof.

In Chemical Formula 1, M1 refers to Co, Mn, and/or Al present in the lithium composite oxide. The y, which represents an existence ratio of M1 to all elements excluding lithium in the lithium composite oxide, may be 0, 0.01, 0.04, 0.07, 0.10, 0.13, 0.16, 0.19, 0.22, 0.25, 0.28, 0.31, 0.34, 0.37, 0.40, 0.43, 0.46, 0.49, 0.52, 0.55, 0.58, 0.6, or a range between any two values thereof.

In Chemical Formula 1, M2 refers to a dopant other than tungsten doped into the lithium composite oxide. The dopant may be present in a doped state in the crystal lattice (at least one of a lithium layer and/or a transition metal layer) of the lithium composite oxide. The z, which represents an existence ratio of M2 to all elements excluding lithium in the lithium composite oxide, may be 0.00, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, or a range between any two values thereof.

When the lithium composite oxide includes a dopant, z in Chemical Formula 1 is greater than 0, and when the lithium composite oxide does not include a dopant, z in Chemical Formula 1 is 0.

The upper and lower limits of the contents of nickel, tungsten, M1, and dopant M2 defined in Chemical Formula 1 may be appropriately selected within a range that satisfies the above definition.

In one example, 1-(x+y+z), which represents a ratio of nickel to all elements excluding lithium in the lithium composite oxide, may be 0.40, 0.42, 0.45, 0.48, 0.51, 0.54, 0.57, 0.60, 0.63, 0.66, 0.69, 0.70, or a range between any two values thereof.

That is, the lithium composite oxide may be a mid-nickel compound. The mid-nickel positive electrode active material mitigates lattice oxygen release and surface phase transition tendency compared to high-nickel materials, thereby suppressing heat generation and thermal runaway due to overcharging, short circuit, thermal shock, and the like.

In addition, the mid-nickel positive electrode active material may have excellent lifetime characteristics due to relatively less occurrence of microcracks or dissolution of metal ions when charging and discharging are repeated.

However, a typical mid-nickel positive electrode active material has a disadvantage of low capacity compared to a high-nickel positive electrode active material.

The lithium composite oxide uses a mid-nickel lithium composite oxide in which single crystals or a small number of single crystal particles are aggregated, thereby having excellent lifetime and stability, and at the same time, can have high capacity and low resistance by doping and/or coating of tungsten through a low-temperature heat treatment. In addition, the lithium composite oxide may have excellent high-rate capacity.

In addition, when the lithium composite oxide comprises secondary particles in which unit particles are aggregated, the concentration gradient layer may be formed on at least a portion of an interface that does not directly contact the external environment due to contact between the unit particles, but is not limited thereto.

Meanwhile, a coating layer may be formed on at least a portion of the surface of at least one of the unit particles.

Tungsten in the coating layer may exist in the form of tungsten oxide or lithium tungsten oxide.

The coating layer may be defined as a region where tungsten oxide and/or lithium tungsten oxide exists.

That is, a first coating layer having a thin thickness and comprising lithium and tungsten may be formed on at least a portion of the surface of at least one of the unit particles. That is, a tungsten-based oxide may exist on at least a portion of the surface of at least one of the unit particles. For example, the thickness of the first coating layer may be 3 nm, 3.5 nm, 4 nm, 4.5 nm, 5 nm, 5.5 nm, 6 nm, 6.5 nm, 7 nm, 7.5 nm, 8 nm, 8.5 nm, 9 nm, 9.5 nm, 10 nm, or a range between any two values thereof, but is not limited thereto.

Here, the first coating layer means a thin coating layer observed on the surface of the unit particles through TEM analysis.

In the present specification, the tungsten concentration gradient and the first coating layer are mutually distinct concepts, where the first coating layer means that the tungsten-based oxide exists independently of the lithium composite oxide.

The tungsten-based oxide forms the first coating layer on at least a portion of the surface of the unit particles, thereby improving capacity characteristics and resistance characteristics.

This first coating layer may be formed by dry-mixing a lithium composite oxide with a tungsten-based compound and then applying a predetermined low-temperature heat treatment process.

In one example, the tungsten concentration gradient layer described above and the first coating layer may simultaneously exist, and at this time, the specific process as described above is required to form a thin thickness by combining their thicknesses.

In addition, when the lithium composite oxide comprises secondary particles in which unit particles are aggregated, the first coating layer may be formed on at least a portion of an interface that does not directly contact the external environment due to contact between the unit particles, but is not limited thereto.

Meanwhile, when the tungsten-based oxide forms a kind of particles and exists on the surface of the lithium composite oxide, the average particle diameter may be 1 to 415 nm, for example, 1 nm, 10 nm, 25 nm, 40 nm, 55 nm, 70 nm, 85 nm, 100 nm, 115 nm, 130 nm, 145 nm, 160 nm, 175 nm, 190 nm, 205 nm, 220 nm, 235 nm, 250 nm, 265 nm, 280 nm, 295 nm, 310 nm, 325 nm, 340 nm, 355 nm, 370 nm, 385 nm, 400 nm, 415 nm, or a range between any two values thereof, but is not limited thereto.

That is, the tungsten-based oxide particles may form a discontinuous island-type second coating layer on at least a portion of the surface of at least one of the unit particles. The thickness of the second coating layer may be 1 to 415 nm, for example, 1 nm, 10 nm, 25 nm, 40 nm, 55 nm, 70 nm, 85 nm, 100 nm, 115 nm, 130 nm, 145 nm, 160 nm, 175 nm, 190 nm, 205 nm, 220 nm, 235 nm, 250 nm, 265 nm, 280 nm, 295 nm, 310 nm, 325 nm, 340 nm, 355 nm, 370 nm, 385 nm, 400 nm, 415 nm, or a range between any two values thereof, but is not limited thereto.

When the tungsten oxide particles of the second coating layer grow excessively, a ratio of a material that can act as a resistance increases, so that the performance of the positive electrode active material may be degraded.

Here, the first coating layer and the second coating layer existing on the surface of the lithium composite oxide can be distinguished by whether particles are formed.

Various phases including lithium, tungsten, oxygen, and the like may be included depending on the temperature at which the first coating layer and the second coating layer are formed. For example, phases such as WO₃, Li₆W₂O₉, Li₄WO₅, and the like may be included, but it is not limited thereto.

Here, performance may vary depending on the type of phase included in the coating layer, and when the coating layer comprises a Li₆W₂O₉ phase, resistance is low and capacity decrease due to reaction between tungsten and lithium can also be minimized.

The WO₃ phase has low conductivity, so it can decrease capacity and increase resistance by itself, but lithium inside the lithium composite oxide reacts during converting all of them into the Li₆W₂O₉ phase, whereby the capacity may be further lowered. Therefore, in addition to converting all WO₃ phases into the Li₆W₂O₉ phase through an accurate reaction, coexistence of the WO₃ phase and the Li₆W₂O₉ phase depending on conditions can also minimize capacity decrease while reducing resistance.

Here, the tungsten-based oxide of the first coating layer and/or the second coating layer may be represented by Chemical Formula 2 below:

[Chemical Formula 2] LiₐW_{b}M3_{c}O_{d}

In Chemical Formula 2, M3 is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Gd, and Nd, and 0≤a≤10, 0<b≤8, 0≤c≤8, 2≤d≤13.

Here, the tungsten-based oxide can react with lithium impurities, and a representing its ratio may be 0, 0.5, 1, 1.5, 2, 2.5, 3, 3.5, 4, 4.5, 5, 5.5, 6, 6.5, 7, 7.5, 8, 8.5, 9, 9.5, 10, or a range between any two values thereof. Here, when lithium impurities are not introduced into the coating layer, a may be 0.

The b representing a tungsten ratio in the coating layer may be 0.1, 0.5, 1, 1.5, 2, 2.5, 3, 3.5, 4, 4.5, 5, 5.5, 6, 6.5, 7, 7.5, 8, or a range between any two values thereof.

The M3 may mean another component introduced in addition to the tungsten-based oxide during formation of the coating layer, and c representing its ratio may be 0, 0.5, 1, 1.5, 2, 2.5, 3, 3.5, 4, 4.5, 5, 5.5, 6, 6.5, 7, 7.5, 8, or a range between any two values thereof. If there is no component introduced other than the tungsten-based oxide, c may be 0.

The d may be 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, or a range between any two values thereof, and may be determined according to a stoichiometric ratio of Li, W, and M3.

The upper and lower limits of the contents of lithium, tungsten, and M3 defined in Chemical Formula 2 may be appropriately selected within a range that satisfies the above definition.

The positive electrode active material can be prepared by various methods as long as it satisfies the above-described characteristics, but according to one aspect, the following method may be considered.

A method for preparing a positive electrode active material according to an aspect may comprise a step of mixing a lithium transition metal oxide and a tungsten oxide and then heat-treating.

Here, the heat treatment may be performed at a maximum temperature of 300 to 500 °C, for example, 300 °C, 305 °C, 310 °C, 315 °C, 320 °C, 325 °C, 330 °C, 335 °C, 340 °C, 345 °C, 350 °C, 355 °C, 360 °C, 365 °C, 370 °C, 375 °C, 380 °C, 385 °C, 390 °C, 395 °C, 400 °C, 405 °C, 410 °C, 415 °C, 420 °C, 425 °C, 430 °C, 435 °C, 440 °C, 445 °C, 450 °C, 455 °C, 460 °C, 465 °C, 470 °C, 475 °C, 480 °C, 485 °C, 490 °C, 495 °C, 500 °C, or a range between any two values thereof, but is not limited thereto.

As described above, when the heat treatment is performed at a low temperature, the performance of the prepared positive electrode active material may be more excellent. In one example, for a more excellent phase balance of the tungsten compound, the heat treatment may be performed at 325 to 375 °C, but is not limited thereto.

It may be maintained at the maximum temperature for 1 to 24 hours, for example, 1 hour, 1.5 hours, 2 hours, 2.5 hours, 3 hours, 3.5 hours, 4 hours, 4.5 hours, 5 hours, 5.5 hours, 6 hours, 6.5 hours, 7 hours, 7.5 hours, 8 hours, 8.5 hours, 9 hours, 9.5 hours, 10 hours, 10.5 hours, 11 hours, 11.5 hours, 12 hours, 12.5 hours, 13 hours, 13.5 hours, 14 hours, 14.5 hours, 15 hours, 15.5 hours, 16 hours, 16.5 hours, 17 hours, 17.5 hours, 18 hours, 18.5 hours, 19 hours, 19.5 hours, 20 hours, 20.5 hours, 21 hours, 21.5 hours, 22 hours, 22.5 hours, 23 hours, 23.5 hours, 24 hours, or a range between any two values thereof, but is not limited thereto.

The heat treatment may raise the temperature to the maximum temperature at a rate of 0.1 to 10 °C/min, for example, 0.1 °C/min, 0.5 °C/min, 1 °C/min, 1.5 °C/min, 2 °C/min, 2.5 °C/min, 3 °C/min, 3.5 °C/min, 4 °C/min, 4.5 °C/min, 5 °C/min, 5.5 °C/min, 6 °C/min, 6.5 °C/min, 7 °C/min, 7.5 °C/min, 8 °C/min, 8.5 °C/min, 9 °C/min, 9.5 °C/min, 10 °C/min, or a range between any two values thereof, but is not limited thereto.

### Lithium secondary battery

According to another aspect of the present disclosure, there is provided a positive electrode including a positive electrode current collector and a positive electrode active material layer formed on the positive electrode current collector. The positive electrode active material layer may include the positive electrode active material according to various embodiments of the present disclosure. Since the content of positive electrode active material is the same as described above, detailed description will be omitted for convenience, and only the remaining components not described above will be described below.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present disclosure provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present disclosure may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present disclosure is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element Wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present disclosure stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present disclosure is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present disclosure, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present disclosure will be described in further detail with reference to examples. However, these examples are merely provided to exemplify the present disclosure, and thus the scope of the present disclosure will not be construed to be limited by these examples.

### Preparation Example 1. Preparation of positive electrode active material

### (1) Example 1

An Ni_{0.60}Co_{0.08}Mn_{0.32}(OH)₂ hydroxide precursor synthesized through a coprecipitation method and LiOH (Li/(Ni+Co+Mn) molar ratio = 1.03) were mixed and heat-treated at 950 °C for 4 hours in an air atmosphere to obtain an intermediate product (lithium transition metal oxide).

Subsequently, the intermediate product and WO₃ (weighed so that a content of tungsten was 0.1 mol%, 0.3 mol%, or 0.5 mol% relative to all transition metals in the intermediate product) were mixed, and heat-treated at 350 °C or 470 °C for 4 hours in a furnace in an air atmosphere to obtain a final product in which a coating layer comprising tungsten was formed on the surface of the lithium transition metal oxide.

As a result of ICP analysis for the final product, it was confirmed that the content of tungsten in the final product was consistent with the design composition.

### (2) Example 2

An Ni_{0.60}Co_{0.08}Mn_{0.32}(OH)₂ hydroxide precursor synthesized through a coprecipitation method and LiOH (Li/(Ni+Co+Mn) molar ratio = 1.03) were mixed and heat-treated at 950 °C for 4 hours in an air atmosphere to obtain an intermediate product (lithium transition metal oxide).

Subsequently, the intermediate product and WO₃ (weighed so that the content of tungsten was 0.3 mol% relative to all transition metals in the intermediate product) were mixed, and heat-treated at 300 °C to 400 °C for 4 hours in a furnace in an air atmosphere to obtain a final product in which a coating layer comprising tungsten was formed on the surface of the lithium transition metal oxide.

As a result of ICP analysis for the final product, it was confirmed that the content of tungsten in the final product was consistent with the design composition.

### (3) Comparative Example 1

An Ni_{0.60}Co_{0.08}Mn_{0.32}(OH)₂ hydroxide precursor synthesized through a coprecipitation method and LiOH (Li/(Ni+Co+Mn) molar ratio = 1.03) were mixed and heat-treated at 950 °C for 4 hours in an air atmosphere to obtain an intermediate product (lithium transition metal oxide).

Subsequently, the intermediate product was heat-treated at 350 °C, 470 °C, or 700 °C for 4 hours in a furnace in an air atmosphere to obtain a final product.

In addition, final products were obtained in the same manner as in Example 1 except that the heat treatment was performed at 700 °C for 4 hours, and these were designated as Comparative Examples 1-4 to 1-6.

### (4) Comparative Example 2

An Ni_{0.60}Co_{0.08}Mn_{0.32}(OH)₂ hydroxide precursor synthesized through a coprecipitation method and LiOH (Li/(Ni+Co+Mn) molar ratio = 1.03) were mixed and heat-treated at 950 °C for 4 hours in an air atmosphere to obtain a final product.

### Preparation Example 2. Manufacture of lithium secondary battery (half-cell)

94 wt% of each positive electrode active material prepared according to Preparation Example 1, 3 wt% of carbon black, and 3 wt% of a PVDF binder were dispersed in 30 g of N-methyl-2 pyrrolidone (NMP) to prepare a positive electrode slurry. The positive electrode slurry was uniformly applied on an aluminum thin film with a thickness of 15 um and vacuum dried at 135 °C to manufacture a positive electrode for a lithium secondary battery.

A half-cell was manufactured using a lithium foil as a counter electrode to the positive electrode, a porous polyethylene membrane (Celgard 2300, thickness: 25 um) as a separator, and an electrolyte in which LiPF₆ was dissolved at a concentration of 1.15 M in a mixed solvent of ethylene carbonate and ethyl methyl carbonate at a volume ratio of 3:7.

### Experimental Example 1. XRD analysis of positive electrode active material

Since the distribution of the coating layer formed on each positive electrode active material prepared according to Preparation Example 1 is different, X-ray diffraction (XRD) analysis was performed thereon to analyze crystallographic characteristics of the lithium transition metal oxide included in the positive electrode active material.

Specifically, the XRD analysis was performed through a Bruker D8E Endeavor diffractometer using Cu-Kα radiation (1.540598 A). Each tungsten phase was defined by referring to an ICDD XRD standard data card from a diffraction spectrum obtained through X-ray diffraction (XRD) analysis using Cu-Kα rays for the positive electrode active material.

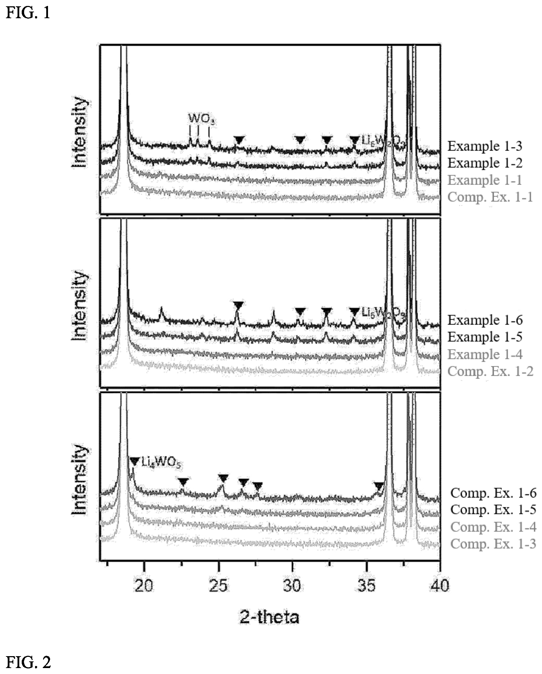

The XRD analysis results are shown in Table 1 below and FIG. 1.

**[Table 1]**

| Classification | Heat treatment Temperature (°C) | W content (mol%) | W phase |
|---|---|---|---|
| Comparative Example 1-1 | 350 | - | - |
| Example 1-1 | 350 | 0.1 | WO₃, Li₆W₂O₉ |
| Example 1-2 | 350 | 0.3 | WO₃, Li₆W₂O₉ |
| Example 1-3 | 350 | 0.5 | WO₃, Li₆W₂O₉ |
| Comparative Example 1-2 | 350 | - | - |
| Example 1-4 | 470 | 0.1 | Li₆W₂O₉ |
| Example 1-5 | 470 | 0.3 | Li₆W₂O₉ |
| Example 1-6 | 470 | 0.5 | Li₆W₂O₉ |
| Comparative Example 1-3 | 350 | - | - |
| Comparative Example 1-4 | 700 | 0.1 | Li₄WO₅ |
| Comparative Example 1-5 | 700 | 0.3 | Li₄WO₅ |
| Comparative Example 1-6 | 700 | 0.5 | Li₄WO₅ |

Referring to the results in Table 1, it can be confirmed that the phase of tungsten (W) generated changes depending on the heat treatment temperature.

As a result of additional analysis, it can be confirmed that when the heat treatment temperature performed after adding the tungsten raw material is 300 to 350 °C, Li₆W₂O₉ is generated, but a portion of WO₃ remains. Meanwhile, at a temperature of 375 °C or higher, all WO₃ reacted and changed into the Li₆W₂O₉ phase, and at a high temperature of 700 °C or higher, a Li₄WO₅ phase was formed.

Since WO₃ acts as a kind of resistance that cannot participate in the charge/discharge reaction, the resistance decreased as WO₃ reacted with lithium during tungsten coating, thereby improving performance. However, when heat treatment was performed at an excessively high temperature, lithium inside the positive electrode material reacted with tungsten, thereby decreasing capacity and degrading performance.

### Experimental Example 2. Surface characteristic analysis of positive electrode active material

EDS analysis was performed on Example 1-2, Example 1-5, and Comparative Example 1-5 prepared in Preparation Example 1, and the results are shown in FIG. 2.

Referring to FIG. 2, it can be confirmed that a coating layer formed in an island shape exists on the surfaces of Example 1-2, Example 1-5, and Comparative Example 1-5 where surface modification was performed.

In Example 1-2, tungsten-based oxide particles having a minimum particle diameter of 21.1 nm and a maximum particle diameter of 210.8 nm existed, and it was confirmed that the average particle diameter was 86.7 nm.

In Example 1-5, tungsten-based oxide particles having a minimum particle diameter of 28.1 nm and a maximum particle diameter of 657.9 nm existed, and it was confirmed that the average particle diameter was 218.0 nm.

In Comparative Example 1-5, tungsten-based oxide particles having a minimum particle diameter of 135 nm and a maximum particle diameter of 1,257 nm existed, and it was confirmed that the average particle diameter was 416.1 nm.

That is, in Example 1-2 and Example 1-5, a tungsten-based oxide coating layer having a relatively small particle diameter compared to the lithium composite oxide particles was formed, but in Comparative Example 1-5, a tungsten-based oxide coating layer having a relatively large particle diameter was formed.

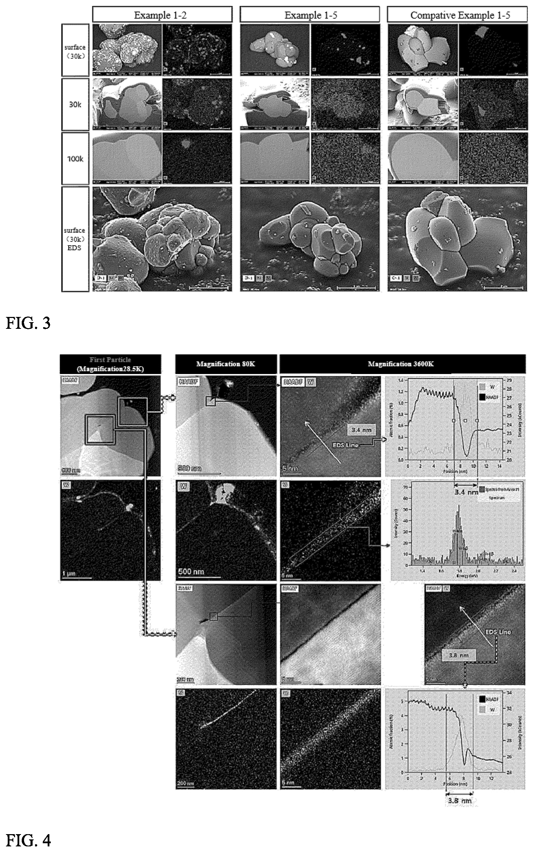

Cross-sectional TEM photographs obtained after cross-sectioning the positive electrode active material according to Example 1-2 prepared in Preparation Example 1 with a FIB (Focused Ion Beam) were analyzed, and STEM-EDS line scan results are shown in FIGS. 3 and 4.

Referring to FIGS. 3 and 4, as a result of EDS analysis, it can be confirmed that the tungsten concentration decreases from the surface of the unit particle toward the particle center direction.

More specifically, a first coating layer having a thin thickness included within 3 to 10 nm was formed on the positive electrode active material, and a portion of tungsten was doped inside the lithium composite oxide by diffusion.

### Experimental Example 3. Evaluation of electrochemical properties of lithium secondary battery (half-cell)

For the lithium secondary batteries (half-cell) manufactured in Preparation Example 2, charge/discharge experiments were performed using an electrochemical analysis device (Toscat-3100 from Toyo) at 25 °C, a voltage range of 3.0 V to 4.45 V, and a discharge rate of 2.0 C/0.1 C to measure initial charge capacity, initial discharge capacity, initial efficiency, and 2.0 C/0.1 C rate performance.

Meanwhile, the initial resistance (R_{ct}) of the lithium secondary battery manufactured according to Preparation Example 2 was measured within a frequency range (10 kHz to 0.01 Hz) using Electrochemical Impedance Spectroscopy (EIS).

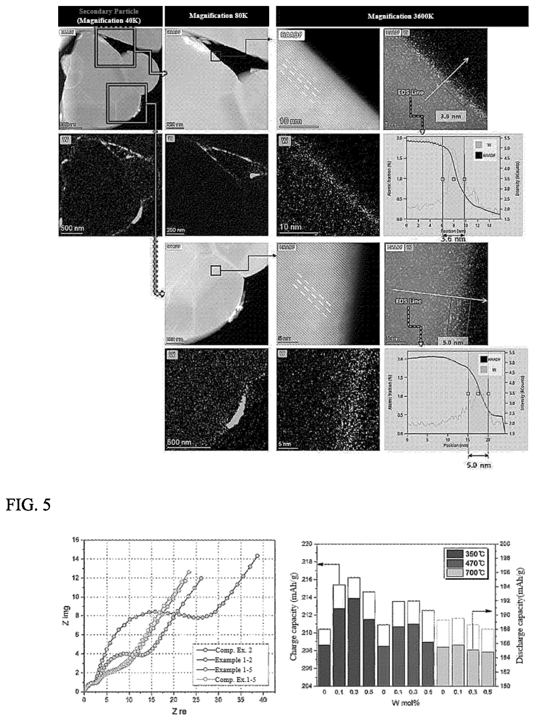

The measurement results are shown in Table 2, Table 3, and FIG. 5 below.

**[Table 2]**

| Classification | Heat treatment Temperature (°C) | W content (mol%) | Charge capacity (mAh/g) | Disharge capacity (mAh/g) | Initial efficiency (%) | 2.0C/0.1C Rate (%) |
|---|---|---|---|---|---|---|
| Comparative Example 1-1 | 350 | - | 210.4 | 185.8 | 88.3 | 81.3 |
| Example 1-1 | 350 | 0.1 | 215.4 | 190.9 | 88.6 | 84.4 |
| Example 1-2 | 350 | 0.3 | 216.2 | 192.4 | 89.0 | 84.8 |
| Example 1-3 | 350 | 0.5 | 214.6 | 189.4 | 88.3 | 84.0 |
| Comparative Example 1-2 | 470 | - | 210.9 | 185.7 | 88.0 | 81.2 |
| Example 1-4 | 470 | 0.1 | 213.5 | 188.4 | 88.2 | 82.9 |
| Example 1-5 | 470 | 0.3 | 213.6 | 188.8 | 88.4 | 82.5 |
| Example 1-6 | 470 | 0.5 | 212.5 | 186.2 | 87.6 | 81.5 |
| Comparative Example 1-3 | 700 | - | 211.4 | 185.5 | 87.7 | 81.1 |
| Comparative Example 1-4 | 700 | 0.1 | 211.6 | 185.8 | 87.8 | 81.3 |
| Comparative Example 1-5 | 700 | 0.3 | 210.9 | 185.1 | 87.8 | 80.1 |
| Comparative Example 1-6 | 700 | 0.5 | 210.4 | 184.8 | 87.8 | 78.9 |

**[Table 3]**

| Classification | Heat treatment Temperature (°C) | Charge capacity (mAh/g) | Disharge capacity (mAh/g) | Initial efficiency (%) | 2.0C/0.1C Rate (%) | R_{ct} |
|---|---|---|---|---|---|---|
| Example 2-1 | 300 | 212.5 | 187.0 | 88.0 | 83.7 | 15.6 |
| Example 2-2 | 325 | 214.1 | 189.5 | 88.5 | 83.8 | 31.2 |
| Example 2-3 | 350 | 216.2 | 192.4 | 89.0 | 84.8 | 12.9 |
| Example 2-4 | 375 | 217.2 | 193.2 | 88.9 | 85.0 | 2.2 |
| Example 2-5 | 400 | 217.2 | 192.4 | 88.6 | 84.5 | 2.1 |
| Comparative Example 1-1 | 350 | 210.4 | 185.8 | 88.3 | 81.3 | - |

Referring to the results of Table 2 and Table 3, it can be confirmed that all Examples 2 subjected to tungsten coating significantly improved electrochemical properties including C-rate (2C), initial efficiency, and charge capacity compared to Comparative Example 1-1 not subjected to tungsten coating. In addition, it can be confirmed that Examples 2-3 to 2-5 subjected to heat treatment at 350 to 400 °C are comprehensively more suitable in terms of capacity, C-rate, and resistance. This seems to be because at a relatively low temperature, the capacity was lowered and the resistance was increased due to the remaining WO₃ phase.

Referring to FIG. 5, considering that the resistance in all Examples is lower than that in Comparative Example 2, it can be confirmed that the resistance characteristics were improved by the tungsten coating. Also, as examined above, in particular, Examples 2-4 and 2-5 further improved resistance characteristics as a ratio of WO₃ acting as a resistance decreased due to the heat treatment temperature.

According to the present specification, capacity and resistance characteristics can be improved by forming a concentration gradient of tungsten with a thin thickness in a region close to the surface of the unit particles constituting the lithium composite oxide, and forming a coating layer comprising tungsten oxide on the surface of the unit particles.

In addition to the above-described effects, specific effects of the present disclosure are described while explaining specific details for the present disclosure below.

Although embodiments of the present disclosure have been described above, those skilled in the art can make various modifications and changes to the present disclosure by adding, changing, or deleting components without departing from the spirit of the present disclosure as set forth in the claims, which will be included within the scope of rights of the present disclosure.

## Claims

1. A positive electrode active material comprising:
a lithium composite oxide capable of intercalation/deintercalation of lithium,
wherein the lithium composite oxide comprises at least lithium and a transition metal,
wherein the lithium composite oxide comprises at least one of a unit particle and a secondary particle in which the unit particles are aggregated, and
wherein a first coating layer having an average thickness of 3 to 10 nm and comprising lithium and tungsten is formed on at least a portion of a surface of .

2. The positive electrode active material of claim 1, wherein the average particle diameter (D₅₀) of the unit particles is 0.2 to 5 µm.

3. The positive electrode active material of claim 1, wherein the lithium composite oxide comprises a tungsten element present in a doped state in the unit particles.

4. The positive electrode active material of claim 3, wherein the tungsten element contained in at least one of the unit particles exhibits a concentration gradient that decreases toward a center of the unit particle.

5. The positive electrode active material of claim 4, wherein the concentration gradient of the tungsten element is present only up to a predetermined depth from the surface of the unit particle.

6. The positive electrode active material of claim 5, wherein 50 mol% or more of the tungsten element contained in at least one of the unit particles is present at a depth of 0.1 to 10 nm from the surface of the unit particle toward a center direction of the unit particle.

7. The positive electrode active material of claim 4, wherein in at least one of the unit particles, at least one of the transition metal elements excluding the tungsten element exhibits a concentration gradient that increases toward the center of the unit particle.

8. The positive electrode active material of claim 7, wherein the concentration gradient of the transition metal element is present only up to a predetermined depth from the surface of the unit particle.

9. The positive electrode active material of claim 1, wherein the lithium composite oxide is represented by Chemical Formula 1 below:
[Chemical Formula 1] Li_{w}Ni_{1-(x+y+z)}WₓM1_{y}M2_{z}O₂
wherein,
M1 is at least one selected from Co, Mn, and Al,
M2 is at least one selected from Na, K, Mg, Ba, B, Ce, Hf, Ta, Cr, F, Al, V, Fe, Zr, Zn, Si, Y, Nb, Ga, Sn, Mo, W, P, Sr, Ge, Nd, Gd, and Cu, and
0.5≤w≤1.5, 0≤x≤0.20, 0≤y≤0.60, 0≤z≤0.20, and 0.40≤1-(x+y+z)≤0.70.

10. The positive electrode active material of claim 1, wherein the first coating layer comprises a tungsten-based oxide represented by Chemical Formula 2 below:
[Chemical Formula 2] LiₐW_{b}M3_{c}O_{d}
wherein,
M3 is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Gd, and Nd, and
0≤a≤10, 0<b≤8, 0≤c≤8, and 2≤d≤13.

11. The positive electrode active material of claim 1, wherein the first coating layer comprises a Li₆W₂O₉ phase.

12. The positive electrode active material of claim 1, wherein a second coating layer comprising tungsten-based oxide particles having an average particle diameter of 1 to 415 nm is formed on at least a portion of the surface of at least one of the unit particles.

13. The positive electrode active material of claim 12, wherein the tungsten-based oxide particles are represented by Chemical Formula 2 below:
[Chemical Formula 2] LiₐW_{b}M3_{c}O_{d}
wherein,
M3 is at least one selected from Ni, Mn, Co, Fe, Cu, Nb, Mo, Ti, Al, Cr, Zr, Zn, Na, K, Ca, Mg, Pt, Au, B, P, Eu, Sm, Ce, V, Ba, Ta, Sn, Hf, Gd, and Nd, and
0≤a≤10, 0<b≤8, 0≤c≤8, and 2≤d≤13.

14. The positive electrode active material of claim 12, wherein the second coating layer comprises a Li₆W₂O₉ phase.

15. A positive electrode comprising the positive electrode active material according to any one of claims 1 to 14.

16. A lithium secondary battery using the positive electrode according to claim 15.
